# FASCICULE DE BREVET EUROPEEN

(11) **EP 2 932 140 B1**
(45) Date de publication et mention de la délivrance du brevet: **25.04.2018**
(21) Numéro de dépôt: 13815077.6
(22) Date de dépôt: 12.12.2013
(51) Int. Cl.: F16K 1/22, F02M 35/10, F02B 29/04, F16K 11/18, F16K 31/04, F02M 26/71

(54) **VANNE A DEUX VOLETS PLACES EN SERIE ET ACTIONNES PAR UN MOTEUR**
VENTIL MIT ZWEI SERIELL ANGEORDNETEN UND DURCH EINEN MOTOR BETÄTIGTEN KLAPPEN
VALVE WITH TWO FLAPS PLACED SERIALLY AND ACTUATED BY A MOTOR

(30) Priorité: 12.12.2012 FR 1261933
(43) Date de publication de la demande: 21.10.2015
(73) Titulaire: Valeo Systèmes de Contrôle Moteur, 95800 Cergy Saint Christophe (FR)
(72) Inventeur: GIRARDON, Franck, F-78700 Conflans Sainte Honorine (FR); LALLEMANT, Mathieu, F-78600 Maisons-Laffitte (FR); LEBRASSEUR, Patrick, F-60240 Montagny en Vexin (FR)
(74) Mandataire: Garcia, Christine
(86) Numéro de dépôt international: PCT/FR2013/053051
(87) Numéro de publication internationale: WO 2014/091164

(56) Documents cités:
- FR-A1- 2 900 455
- US-A1- 2005 028 796
- US-A1- 2010 206 274
- US-A1- 2012 145 134

## Description

L'invention concerne une vanne, destinée par exemple à être utilisée dans un circuit d'admission d'air d'un moteur thermique et particulièrement dans un circuit d'admission d'air d'un moteur diesel.

Un tel circuit d'admission d'air comprend de manière connue une voie refroidie et une voie non refroidie, encore appelée voie by-pass, sa fonction étant de dériver la voie refroidie. Ces deux voies sont contrôlées par une ou plusieurs vannes permettant d'une part le dosage de la quantité d'air entrant dans le moteur, et d'autre part la sélection de la voie, refroidie ou non refroidie, empruntée par l'air d'admission. Ces deux voies peuvent ensuite se rejoindre à l'entrée du moteur thermique.

Un premier type connu d'agencement de circuit d'admission d'air, décrit dans FR 2 900 455, est constitué par une vanne trois voies comportant deux volets indépendants montés en parallèles, chaque volet permettant de contrôler le débit d'air circulant dans la voie dans laquelle il est monté. Pour des raisons de sécurité et afin d'éviter le blocage du moteur, chaque volet doit être équipé d'un capteur de position, chacun des volets pouvant être fermé totalement. De plus, chaque volet pouvant être le siège d'une fuite, le montage en parallèle augmente le facteur de risque d'une fuite au niveau de la vanne.

Un autre type connu d'agencement de circuit d'admission d'air est constitué par une première vanne de dosage monté en série avec une deuxième vanne by-pass. La première vanne ayant pour fonction de doser l'air circulant dans le circuit d'admission et la deuxième vanne ayant pour fonction la sélection de la voie empruntée par l'air d'admission. Il en résulte un encombrement important et une complexité élevée liée au pilotage de deux composants distincts.

Un dernier type connu d'agencement de circuit d'admission d'air est constitué par une première vanne de dosage montée sur la voie refroidie et une deuxième vanne de dosage montée sur la voie non refroidie. Il en résulte un risque élevé de fuite lié à la présence de deux vannes montées en parallèles. Ce type d'agencement implique un encombrement important et une complexité élevée liée au pilotage de deux composants distincts.

Il existe un besoin pour un agencement de circuit d'admission d'air d'un moteur thermique, constitué par une seule vanne ayant pour double fonction, de doser l'air d'admission et de sélectionner la voie empruntée par l'air d'admission. Un but de l'invention est de fournir un agencement de circuit d'admission qui soit simple, fiable et économique.

À cet effet, on prévoit, selon l'invention, une vanne trois voies, notamment destinée à être utilisé dans un circuit d'admission d'air d'un véhicule automobile, comprenant :
- un corps délimitant un premier, un deuxième et un troisième conduit, lesdits conduits débouchant dans un espace intérieur commun,
- un premier volet apte à être déplacé pour contrôler le débit de fluide circulant dans le premier conduit,
- un deuxième volet apte à être déplacé pour contrôler le débit de fluide circulant dans les deuxième et troisième conduits,
- un unique actionneur agencé pour déplacer sélectivement l'un au moins du premier et du deuxième volet.

On prévoit en outre selon l'invention, une vanne trois voies, notamment destinée à être utilisé dans un circuit d'admission d'air d'un véhicule automobile, comprenant :
- un corps délimitant un premier, un deuxième et un troisième conduit, lesdits conduits débouchant dans un espace intérieur commun,
- un premier volet apte à être déplacé pour obturer le premier conduit,
- un deuxième volet apte à être déplacé pour obturer sélectivement l'un ou l'autre des deuxième et troisième conduits,
- un unique actionneur agencé pour déplacer sélectivement l'un au moins du premier et du deuxième volet.

Ainsi, le deuxième volet est apte à être déplacé pour obturer le deuxième conduit lorsque ledit volet est dans une première position et pour obturer le troisième conduit lorsque ledit volet st dans une deuxième position distincte de la première position.

Au sens de la présente demande, un conduit est obturé quand la section de passage dans ce conduit au niveau du volet est minimale, par exemple aux fuites près. Par exemple, lorsque le conduit est fermé, le volet s'étend perpendiculairement à la paroi du conduit dans la zone dans laquelle il est disposé.

Dans un tel agencement, les premier et deuxième volets sont montés en série ce qui a pour effet de limiter les risques liés à l'existence d'une fuite sur un des volets. « Les premier et le deuxième volets sont montés en série » signifie que lorsque le fluide circule dans le premier conduit vers l'un des deuxième et troisième conduit, il rencontre successivement le premier volet puis le deuxième volet.

Les deux volets sont actionnés par un unique actionneur, ce qui permet de disposer d'une vanne plus compacte et moins coûteuse.

Lorsque la vanne est utilisée dans un circuit d'admission d'air d'un véhicule automobile, le premier conduit est de préférence relié à l'entrée d'air, les deuxième et troisième conduits forment alors respectivement une partie de la voie refroidie et de la voie non refroidie.

De préférence, le premier volet est disposé dans le premier conduit.

En se déplaçant, le premier volet peut obturer la section de passage dans le premier conduit, au niveau dudit volet.

De préférence, le deuxième volet est disposé dans l'espace intérieur commun.

En se déplaçant, le deuxième volet peut obturer sélectivement la section de passage dans l'un ou l'autre des deuxième et troisième conduits, au niveau dudit volet.

De préférence, l'actionneur est un moteur électrique à courant continu.

Selon un premier mode de réalisation, la vanne comprend une première roue de transmission agencée pour entraîner le premier volet et une deuxième roue de transmission agencée pour entraîner le deuxième volet.

Avantageusement, l'actionneur comprend une roue d'actionnement agencée pour entraîner directement l'une de la première et de la deuxième roue de transmission et indirectement l'autre de la première et de la deuxième roue de transmission.

Dans un mode particulier de réalisation, la roue d'actionnement est agencée pour entraîner directement ou indirectement la deuxième roue de transmission et pour entraîner indirectement la première roue de transmission via au moins la deuxième roue de transmission.

Avantageusement, la vanne est configurée de manière à ce qu'à partir d'un état de repos des premier et deuxième volets, une rotation selon un premier sens de rotation de la roue d'actionnement provoque un déplacement du premier volet sans déplacer le deuxième volet.

Dans un mode de réalisation, le premier et le deuxième volet sont dans l'état de repos lorsque le premier volet est dans une position telle que le premier conduit est ouvert et lorsque le deuxième volet est dans une position telle que l'un des deuxième et troisième conduits est fermé et l'autre des deuxième et troisième conduits est ouvert.

Au sens de la présente demande, un conduit est ouvert quand la section de passage dans ce conduit au niveau du volet est maximale. Par exemple, lorsque le conduit est ouvert, le volet s'étend parallèlement à la paroi du conduit dans la zone dans laquelle il est disposé.

Dans une application au circuit d'admission d'un moteur thermique, la vanne peut être configurée pour que lorsque les volets sont dans l'état de repos, le circuit d'admission soit ouvert sur la voie refroidie.

Les volets et les roues de transmission peuvent être agencés de telle manière que la rotation d'une roue ne déplace pas systématiquement le volet qu'elle commande. De cette manière, une rotation selon un premier sens de la roue d'actionnement peut provoquer un déplacement du premier volet sans déplacer le deuxième volet bien que cette rotation déplace la deuxième roue.

Un tel agencement de l'une des première et deuxième roue de transmission permet de ne déplacer le volet correspondant que sur une portion de sa rotation. Cette utilisation seulement partielle de la rotation de la première ou la deuxième roue pour déplacer le volet correspondant est par exemple permise grâce à une butée mobile qui sera mentionnée ci-après.

Cette rotation selon le premier sens de rotation, à partir de l'état de repos des volets, permet en déplaçant le premier volet, de réaliser un dosage sur l'un des deuxième et troisième conduits.

Avantageusement, la vanne est configurée de manière à ce qu'à partir de l'état de repos des premier et deuxième volets, une rotation selon un deuxième sens de rotation de la roue d'actionnement, opposé au premier sens de rotation, provoque selon une première étape un déplacement du deuxième volet sans déplacer le premier volet.

Cette première étape a pour effet de sélectionner celui parmi le deuxième et troisième conduit à mettre en communication fluidique avec l'espace intérieur commun de la vanne.

Avantageusement, la vanne est configurée de manière à ce que la poursuite de la rotation selon le deuxième sens de rotation de la roue d'actionnement provoque, selon une deuxième étape ultérieure, un déplacement du premier volet et du deuxième volet, sans que ce déplacement du deuxième volet ne modifie le débit dans les deuxième et troisième conduits.

Avantageusement, la vanne est configurée de manière à ce que la deuxième étape ultérieure démarre lorsque le deuxième volet a atteint une position dans laquelle il obture l'un du deuxième et du troisième conduit.

Cet agencement a pour effet de permettre que cette deuxième étape ultérieure corresponde à un dosage dans celui du deuxième et du troisième conduit non obturé par le deuxième volet à l'issue de la première étape.

Avantageusement, le deuxième volet définit une section d'obturation supérieure à la section de passage dans le deuxième ou troisième conduit au niveau de l'espace intérieur commun.

De préférence, le deuxième volet, l'espace intérieur commun, les deuxième et troisième conduits sont agencés pour permettre au deuxième volet d'être déplacé partiellement sans que la section de passage dans les deuxième et troisième conduits de soit modifiée.

Un tel agencement permet à l'unique actionneur de déplacer simultanément les premier et deuxième volets tout en n'agissant que sur la section de passage du premier conduit.

De préférence, l'espace intérieur commun est cylindrique de base circulaire et la section de passage de l'espace intérieur commun vers le deuxième et le troisième conduit s'étend sur un secteur angulaire θi mesuré depuis l'axe du cylindre et une hauteur hi mesurée le long dudit axe du cylindre, et les dimensions correspondantes θj et hj du volet peuvent être telles que θj > θi et/ou hj > hi. L'espace intérieur commun apte à recevoir la portion de volet ne recouvrant pas l'ouverture du deuxième ou du troisième conduit joue le rôle de zone de recouvrement.

Avantageusement, le deuxième volet est un cylindre droit dont la base est définie par un secteur angulaire, ce cylindre s'étendant le long de son axe de rotation, ledit axe passant par le sommet du secteur angulaire.

De préférence, le deuxième volet est agencé pour que son axe de rotation passe par le centre de la base circulaire du cylindre définissant l'espace intérieur commun.

Le deuxième volet peut ainsi être déplacé partiellement sans que ce déplacement n'ait d'influence sur l'ouverture ou la fermeture du deuxième ou troisième conduit. Dans l'exemple ci-dessus, lorsque le volet obture un des conduits, le secteur angulaire θj - θi n'obture pas le conduit, de sorte qu'un déplacement en rotation du deuxième volet selon un angle inférieur ou égal à θj - θi peut ne pas affecter l'obturation d'un conduit.

Selon un mode de réalisation, au moins l'un du premier et du deuxième volet est solidaire d'un arbre, l'arbre étant pourvu d'une butée mobile apte à être entrainée :
- par la première ou deuxième roue de transmission correspondante montée libre autour dudit arbre, et
- par un organe de rappel.

De préférence, l'organe de rappel est un ressort de torsion monté autour de l'arbre et contraint par l'une de ses deux extrémités sur le corps et l'autre de ses deux extrémités sur le corps et sur ladite butée mobile.

De préférence, les deux extrémités du ressort sont contraintes à la fois sur le corps et sur ladite butée mobile.

Chacun des premier et deuxième volets peut être configuré selon l'une ou l'autre de ces deux configurations.

Par exemple, l'une au moins de la première et de la deuxième roue peut comprendre au moins une portion d'entrainement de la butée mobile correspondante et au moins une portion passive dans laquelle elle n'entraine pas la butée mobile. La roue peut notamment comprendre plusieurs portions d'entrainement réparties sur le pourtour de la roue et ces portions d'entrainement peuvent être deux à deux séparées par une portion passive. Par exemple, chaque portion d'entrainement s'étend le long d'un rayon de la roue et chaque portion passive est formée par un évidement entre lesdites portions d'entrainement.

De préférence, au moins un des deux arbres est équipé d'un capteur de position. Par exemple, l'arbre sur lequel est monté libre la première roue de transmission est équipé d'un capteur de position.

En variante, au moins une des deux roues de transmission est équipée d'un capteur de position. Par exemple, la première roue de transmission est équipée d'un capteur de position.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente de manière schématique, une architecture d'alimentation d'un moteur de véhicule turbocompressé,
- la figure 2 est une vue en perspective et de dessous, d'un corps de vanne selon un exemple de mise en oeuvre de l'invention,
- la figure 3 est une vue en perspective et de dessus, d'une vanne selon cet exemple de mise en oeuvre de l'invention, le capot de la vanne n'étant pas représenté,
- la figure 4 est une vue en perspective des composants internes d'une vanne selon cet exemple de mise en oeuvre de l'invention,
- la figure 5 est une vue en perspective d'un détail des composants internes d'une vanne selon cet exemple de mise en oeuvre de l'invention,
- la figure 6 est une représentation de la loi de déplacement des premier et deuxième volets en fonction de la tension appliquée sur l'actionneur de la vanne.
- la figure 7 à 10 sont des vues schématiques selon une représentation linéaire de différents états de la vanne,
- les figures 11 à 14 sont des vues schématiques de dessus de la vanne selon cet exemple de mise en oeuvre de l'invention, représentant le déplacement des premier et deuxième volets, respectivement selon les états de la vanne selon les figures 7 à 10.

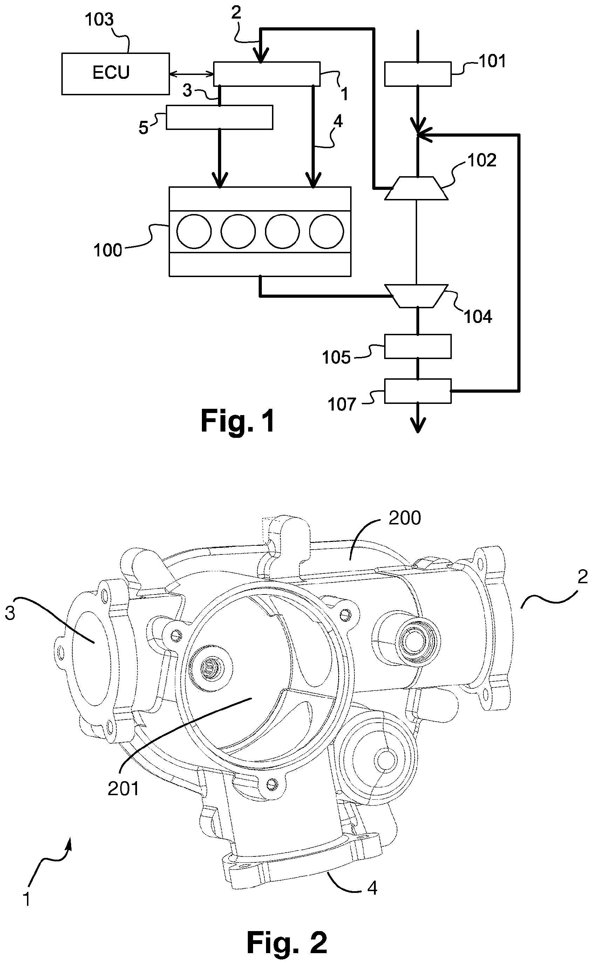

En se référant à la figure 1, on va décrire un exemple d'environnement dans lequel peut être utilisée une vanne 1 selon un exemple de mise en oeuvre de l'invention. La figure 1 représente le circuit d'alimentation en air d'un moteur à combustion interne turbocompressé pour un véhicule automobile 100. L'air, prélevé à l'extérieur, passe dans un filtre à air 101 puis est comprimé par le compresseur 102 du turbocompresseur qui l'envoie dans la vanne 1. La vanne 1 possède un premier conduit 2 formant ici la voie d'entrée 2 par laquelle passe l'air en provenance du compresseur, et un deuxième 3 et troisième 4 conduits qui définissent ici deux voies de sortie 3 et 4. La vanne 1 reçoit des commandes en provenance d'un calculateur 103, qui sont exécutées sous la forme d'un déplacement de volets qui seront décrits par la suite. La voie de sortie 3, dite voie refroidie, est reliée à un échangeur thermique ou refroidisseur 5, alors que la voie de sortie 4, dite voie by-pass ou voie non refroidie, est reliée directement au moteur à combustion 100. En sortie du moteur à combustion, les gaz brûlés sont dirigés vers le circuit d'échappement et passent dans la turbine 104 du turbocompresseur qui prélève une partie de leur énergie résiduelle pour actionner le compresseur correspondant 102. Ces gaz d'échappement traversent ensuite classiquement un filtre à particules et/ou un catalyseur 105 avant d'être éjectés du véhicule.

Dans le cas d'une architecture basse pression, une partie des gaz d'échappement est prélevée en aval de la turbine 104 et réinjectée, via une vanne basse pression 107, en amont du compresseur 102 du turbocompresseur. Le fluide qui circule dans le circuit d'admission n'est alors pas uniquement de l'air mais un mélange d'air et de gaz d'échappement.

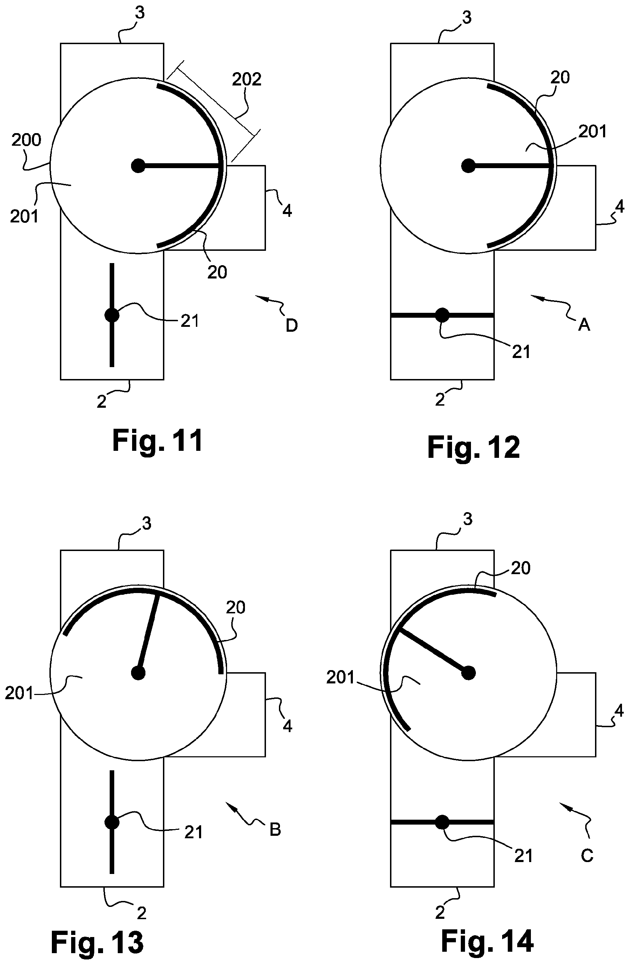

La figure 2 représente le corps 200 de la vanne 1. Chaque conduit 2 à 4 débouche dans un espace intérieur commun 201 par une section de passage. Dans l'exemple décrit, les sections de passage ont chacune la forme d'une portion de surface latérale d'un cylindre dont la base circulaire est formée par le fond de l'espace intérieur commun 201. Chaque section de passage est ici définie par une coordonnée angulaire θi mesurée depuis l'axe du cylindre et une hauteur hi mesurée le long dudit axe. Comme représenté sur les figures 11 à 14, la section de passage vers le conduit 4 est séparé de celle vers le conduit 3 par la paroi de l'espace intérieur commun 201, cette paroi formant une zone de recouvrement 202, comme expliqué ci-après.

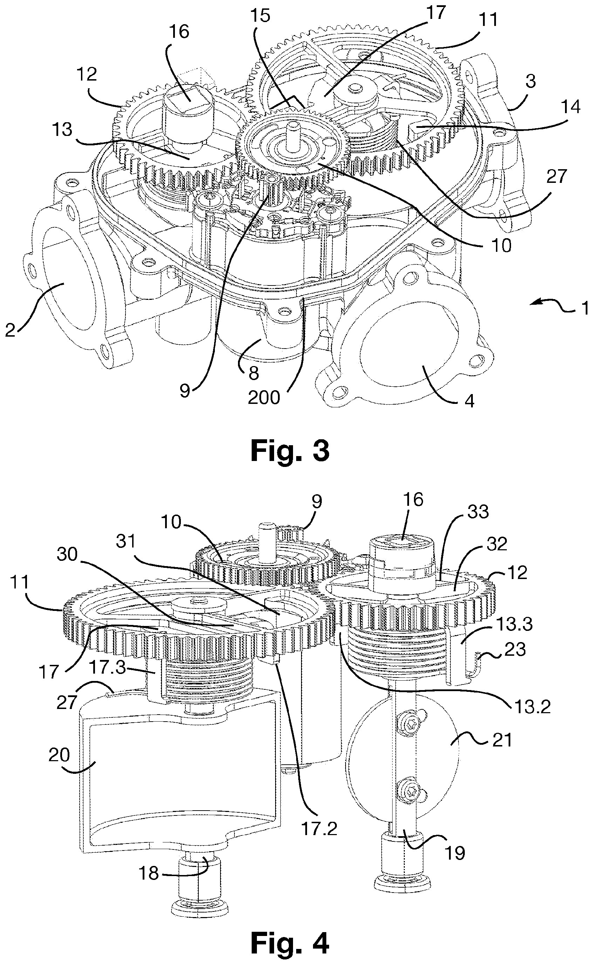

La figure 3 représente le corps 200 de vanne 1 recevant un train d'engrenages actionné par un moteur électrique à courant continu 8. Le moteur électrique entraine en rotation, par l'intermédiaire de son axe pivot 9, une roue d'actionnement 10 qui engrène sur une première roue de transmission 11, appelée 'roue by-pass', qui engrène elle-même à son tour sur une deuxième roue de transmission 12, appelée 'roue doseur'.

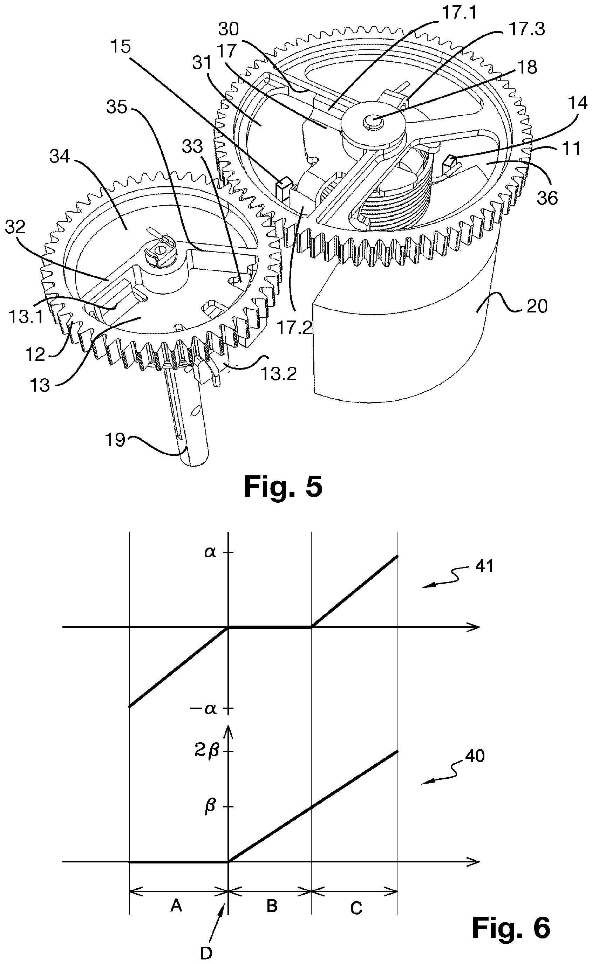

En se référant maintenant aux figures 4 et 5, on voit le détail du train d'engrenage et la structure à deux volets de l'exemple décrit.

La roue doseur 12 est montée libre autour d'un arbre 19, appelé 'arbre doseur'. Une butée mobile 13, appelée butée mobile doseur, est solidaire de cet arbre et présente une première portion en saillie 13.1 en direction de la roue doseur et une deuxième 13.2 et troisième 13.3 portion en saillie en direction opposée à cette même roue. Un capteur de position angulaire 16 (par exemple un capteur à effet Hall) est monté sur cet arbre. Un ressort torsion 23 est monté autour de cet arbre, ses deux extrémités étant en contact chacune à la fois sur le corps de vanne par l'intermédiaire de butées fixes, non représentées, et aux deuxième et troisième portions en saillies de la butée mobile doseur.

Une position de repos est définie lorsque les deux extrémités du ressort 23 sont en contact avec les butées fixes. Dans cette position de repos, aucune des deuxième et troisième portions en saillie de la butée mobile ne contraint l'une des extrémités du ressort 23 pour tendre à les déplacer de telle sorte à ce qu'elles ne soient plus en contact avec le corps de la vanne.

La butée mobile doseur 13 peut être entrainée en rotation par la roue doseur, dans chacun de ses deux sens de rotation et via la première portion en saillie 13.1. Lorsqu'elle est entrainée en rotation par la roue doseur, la butée mobile doseur contraint le ressort 23 par l'intermédiaire de l'une de ses deuxième 13.2 et troisième 13.3 portion en saillie. Dans l'exemple décrit, la roue doseur 12 comprend une portion d'entrainement 32 (en l'occurrence, un pont de matière disposé selon un rayon de cette roue doseur) de la portion en saillie 13.1 de la butée mobile doseur 13, qui entraine en rotation la butée mobile doseur 13 lorsque la roue doseur tourne dans le sens trigonométrique à partir de la position de repos, et une portion passive 33 (en l'occurrence, un évidement ménagé dans la roue sur un secteur angulaire) qui n'entraine pas en rotation la butée mobile doseur, lorsque la roue doseur tourne dans le sens trigonométrique inverse à partir de la position de repos et selon un secteur angulaire au maximum égal à celui de la portion passive. La roue doseur 12 comprend une autre portion d'entrainement 35 de la portion en saillie 13.1 de la butée mobile doseur 13, lorsque la roue doseur tourne dans le sens trigonométrique inverse à partir de la position de repos et après que la roue doseur ait effectué un angle au maximum égal à celui défini par le secteur angulaire de la portion passive 33. Les deux portions d'entrainement sont réparties sur le pourtour de la roue doseur et séparées deux à deux par les portions passives 33 et 34.

Dans la position de repos, la portion d'entrainement 32 est en contact avec la portion en saillie 13.1 de la butée mobile doseur 13. A partir de la position de repos, lorsque la roue doseur 12 tourne dans le sens trigonométrique, la portion d'entrainement 32 entraine en rotation la portion en saillie 13.1 de la butée mobile doseur 13 ce qui a pour conséquence d'une part de contraindre l'une des extrémités du ressort 23 via la portion en saillie 13.3 et d'autre part d'entrainer en rotation l'arbre doseur 19 donc le volet doseur 21.

A partir de cette position de repos, lorsque la roue doseur 12 tourne dans le sens trigonométrique inverse, la portion d'entrainement 32 n'entraine pas la portion en saillie 13.1 de la butée mobile doseur 13. La portion passive 33 permet une rotation de la roue doseur selon un angle au maximum égal à celui du secteur angulaire de la portion passive, avant que la portion d'entrainement 35 ne vienne en contact de la portion en saillie 13.1. Une poursuite de la rotation de la roue doseur dans le sens trigonométrique inverse ayant alors pour effet d'entrainer la portion en saillie 13.1 de la butée mobile doseur 13 ce qui a pour conséquence d'une part de contraindre l'autre des extrémités du ressort 23 via la portion en saillie 13.2 et d'autre part d'entrainer en rotation l'arbre doseur 19 donc le volet doseur 21.

Lorsque la roue doseur n'exerce plus de force sur la portion en saillie 13.1, soit par un changement du sens de rotation par rapport à celui ayant eu pour effet de quitter la position de repos, soit lorsque la roue doseur devient libre en rotation, suite à une absence d'effort appliqué par la roue d'entrainement par exemple, le ressort doseur 23 tend à revenir dans sa position de repos et l'une ou l'autre de ses extrémités entraine l'une ou l'autre des portions en saillies 13.2 ou 13.3 jusqu'à ce que cette extrémité soit en contact avec la butée fixe avec laquelle elle était en contact en position de repos.

Dans l'exemple considéré, le volet doseur 21 est disposé dans le conduit 2. Ce volet est plat et a la forme d'un disque. Il s'étend de part et d'autre d'une partie de l'arbre 19, et est disposé selon son diamètre. Il est emporté en rotation autour de cet arbre et se déplace ainsi au sein du conduit 2, ceci ayant pour effet d'obturer plus ou moins ce conduit.

La roue by-pass 11 est montée libre autour d'un arbre 18, appelé 'arbre by-pass'. Une butée mobile 17, appelée 'butée mobile by-pass' est solidaire de cet arbre et présente une première portion en saillie 17.1 en direction de la roue by-pass et une deuxième 17.2 et troisième 17.3 portion en saillie en direction opposée à cette même roue. Un ressort torsion 27 est monté autour de cet arbre, la première de ses deux extrémités étant en contact sur le corps de vanne par l'intermédiaire d'une butée fixe 14, et la deuxième de ses deux extrémités étant en contact avec la troisième portion en saillie 17.3 de la butée mobile by-pass 17.

Une position de repos est définie lorsque la deuxième portion en saillie 17.2 de la butée mobile by-pass 17 est en contact avec une butée fixe 15, liée au corps de vanne.

Dans l'exemple considéré, la butée mobile by-pass 17 peut être entrainée en rotation par la roue by-pass 11 lorsque celle-ci tourne dans le sens trigonométrique et via la première portion en saillie 17.1, la butée fixe 15 ayant pour effet d'une part de retenir la butée mobile by-pass en position de repos et d'autre part d'empêcher qu'elle puisse être déplacée en rotation dans le sens trigonométrique inverse. Lorsqu'elle est entrainée en rotation par la roue by-pass 11, la butée mobile by-pass contraint le ressort 27 par l'intermédiaire de sa troisième portion en saillie 17.3. La roue by-pass 11 comprend une portion d'entrainement 30 (en l'occurrence, un pont de matière disposé selon un rayon de cette roue by-pass) de la première portion en saillie 17.1, lorsque la roue by-pass tourne dans le sens trigonométrique à partir de la position de repos, et une portion passive 31 (en l'occurrence, un évidement ménagé dans la roue sur un secteur angulaire) qui permet à la roue by-pass de tourner dans le sens trigonométrique inverse, en partant de la position de repos et selon un secteur angulaire au maximum égal à celui de la portion passive, sans avoir d'action sur la portion en saillie 17.1.

Dans la position de repos, la portion d'entrainement 30 est en contact avec la portion en saillie 17.1 de la butée mobile by-pass 17. A partir de cette position de repos, lorsque la roue by-pass 11 tourne dans le sens trigonométrique, la portion d'entrainement 30 entraine en rotation la portion en saillie 17.1 ce qui a pour conséquence d'une part de contraindre l'une des extrémités du ressort by-pass 27 via la portion en saillie 17.3 et d'autre part d'entrainer en rotation l'arbre by-pass 18 donc le volet by-pass 20.

A partir de cette position de repos, lorsque la roue by-pass 11 tourne dans le sens trigonométrique inverse, la portion passive 31 permet une rotation de la roue by-pass selon un angle au maximum égal à celui du secteur angulaire de cette portion passive.

Lorsque la roue by-pass n'exerce plus de force sur la portion en saillie 17.1, soit par un changement du sens de rotation par rapport à celui ayant eu pour effet de quitter la position de repos, soit lorsque la roue by-pass devient libre en rotation, suite à une absence d'effort appliqué par la roue d'entrainement par exemple, le ressort by-pass 27 tend à revenir dans sa position de repos et l'une de ses extrémités entraine la portion en saillie 17.3 jusqu'à ce que l'autre portion en saillie 17.2 soit en contact avec la butée fixe 15, avec laquelle elle était en contact en position de repos.

Le volet by-pass 20 est disposé dans l'espace intérieur commun 201. Ce volet s'étend autour de l'arbre 18 sur un secteur angulaire θj et le long de cet arbre sur une hauteur hj. Il est emporté en rotation autour de l'arbre 18 et se déplace ainsi au sein de l'espace intérieur commun 201. En se déplaçant, il vient obturer l'un ou l'autre des conduits 3 et 4.

La figure 6 représente la loi de déplacement du volet by-pass 20 (courbe 40) et du volet doseur 21 (courbe 41), c'est-à-dire l'évolution relative du positionnement angulaire de ces deux volets 20 et 21 en fonction de la tension de commande du moteur électrique à courant continu 8, donc de la rotation de la roue d'actionnement 10. Cette loi de déplacement est déterminée par l'agencement particulier :
- des roues by-pass 11 et doseur 12,
- des portions d'entrainement 32, 35 et 30,
- des portions passives 33 et 31,
- des butées mobiles by-pass 13 et doseur 17,
- des ressorts de torsion by-pass 27 et doseur 23,
- des butées fixes,
dont le fonctionnement a été décrit en rapport aux figures 4 et 5.

L'axe des abscisses de chaque courbe correspond à la tension de commande du moteur électrique. En l'absence d'alimentation électrique du moteur, les volets 20 et 21 sont dans un état de repos.

L'axe des ordonnées de chaque courbe 40 et 41 représente la valeur de l'angle que prennent respectivement les volets 20 et 21 par rapport à leur état de repos. Par rapport à l'état de repos, le moteur électrique est susceptible d'entrainer le volet doseur 21 dans une rotation d'ampleur -α dans un premier sens de rotation et +α dans un deuxième sens de rotation. Par rapport à l'état de repos, le moteur électrique est par ailleurs susceptible d'entrainer le volet by-pass 20 dans une rotation d'ampleur 2β dans le deuxième sens de rotation, ce volet by-pass 20 ne se déplaçant pas dans le premier sens de rotation du moteur électrique.

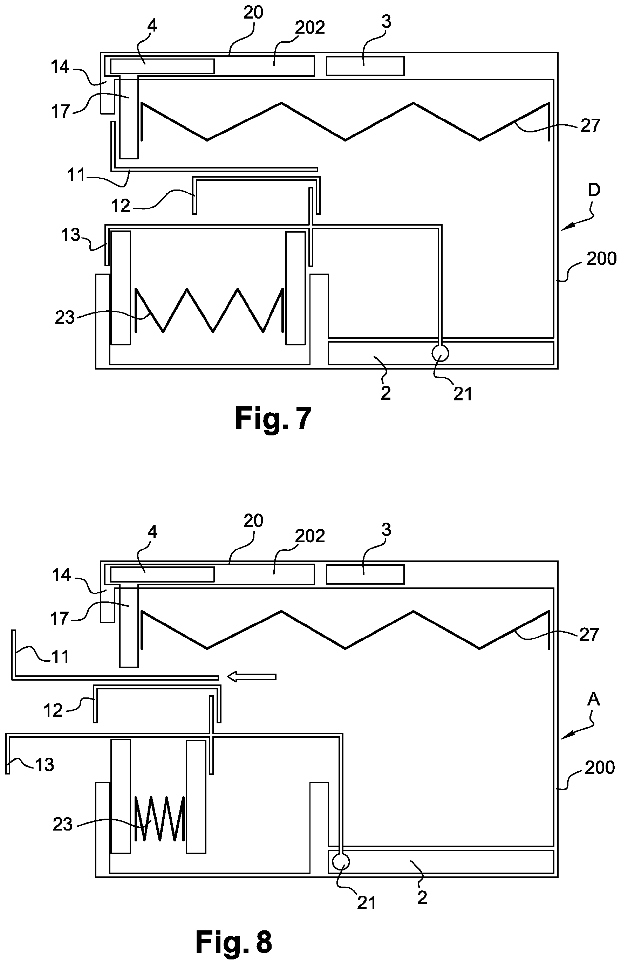

La référence D située entre les plages A et B des courbes 40 et 41, représente l'état de repos. Dans cet état de repos, la position des volets 20 et 21 est représentée aux figures 7 et 11. Dans cet état, le volet doseur 21 ouvre au maximum le conduit 2 et le volet by-pass 20 est dans une position dans laquelle il obture complètement le conduit by-pass 4 et ouvre au maximum le conduit 3. Un secteur angulaire du volet by-pass chevauche la zone de recouvrement 202.

La plage A des courbes 40 et 41 correspond à un dosage de la voie refroidie 3 comme cela va être décrit en référence aux figures 8 et 12. Dans cette plage, le moteur tourne selon un premier sens de rotation, c'est-à-dire dans un sens pour lequel une tension négative est appliquée sur sa commande d'actionnement. Les roues by-pass et doseur effectuent une rotation en sens opposé (l'une engrenant sur l'autre). Dans l'exemple considéré, la roue doseur tourne dans le sens trigonométrique et la roue by-pass tourne dans le sens trigonométrique inverse. Dans ce sens de rotation des roues doseur et by-pass et partant de l'état de repos tel que représenté aux figures 7 et 11, l'effet de l'agencement des portions passives et d'entrainement des deux roues d'actionnement ainsi que les mouvements des butées mobiles by-pass et doseur sont tels que décrits précédemment relativement aux figures 4 et 5.

Ainsi, dans cette plage A, la roue by-pass 11 n'entraine pas la butée mobile by-pass 17 ce qui a pour effet de ne pas entrainer le volet by-pass 20 qui reste dans son état de repos et la roue doseur 12 entraine la butée mobile doseur 13 ce qui a pour effet d'entrainer le volet doseur 21 qui ferme le conduit 2.

Le volet doseur 21 est déplacé en rotation selon un angle au maximum égal à -α par rapport à sa position dans l'état de repos et le volet by-pass reste dans son état de repos.

A partir de l'état de repos, une telle rotation des roues by-pass et doseur selon le premier sens de rotation du moteur permet de doser la voie refroidie 3, la rotation de chaque roue ne s'étendant pas au-delà de l'angle pour lequel le volet doseur obstrue complètement la voie refroidie 3, c'est-à-dire lorsque l'angle est égal à -α par rapport à sa position dans l'état de repos.

Comme décrit en référence aux figures 4 et 5, le volet doseur 21 revient à son état de repos, sous l'effet du ressort de torsion 23 à la suite d'une rotation en sens inverse du moteur électrique.

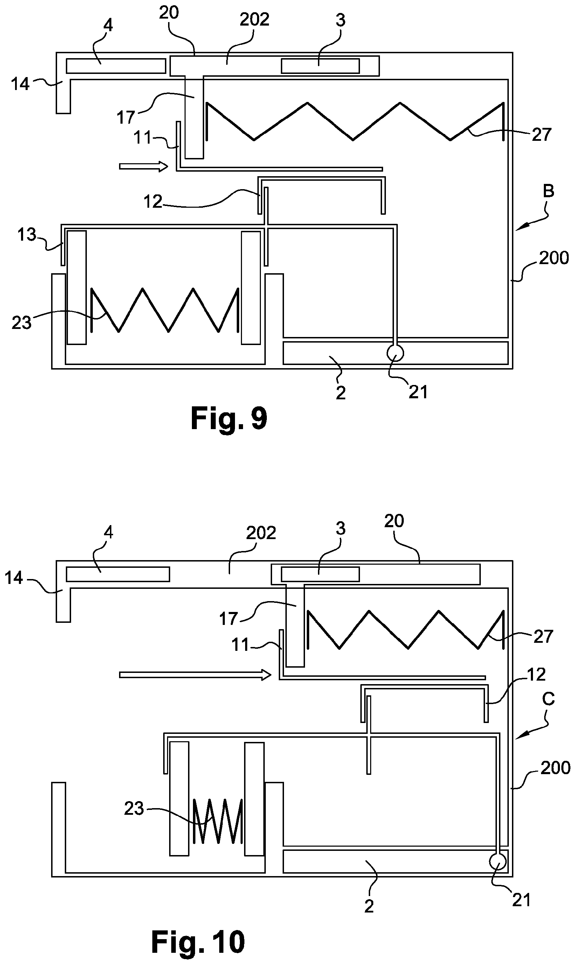

La plage B des courbes 40 et 41 correspond à une sélection de la voie by-pass 4, comme représenté sur les figures 9 et 13. Dans cette plage, le moteur tourne selon un deuxième sens de rotation, c'est-à-dire dans un sens pour lequel une tension positive est appliquée sur sa commande d'actionnement. Dans l'exemple considéré, la roue doseur tourne dans le sens trigonométrique inverse et la roue by-pass tourne dans le sens trigonométrique. Dans ce sens de rotation des roues doseur et by-pass et partant de l'état de repos tel que représenté aux figures 7 et 11, l'effet de l'agencement des portions passives et d'entrainement des deux roues d'actionnement ainsi que les mouvements des butées mobiles by-pass et doseur sont tels que décrits précédemment relativement aux figures 4 et 5.

Ainsi, dans cette plage B, la portion d'entrainement 30 de la roue by-pass 11 entraine en rotation la portion en saillie 17.1 de la butée mobile by-pass 17 ce qui a pour effet d'entrainer en rotation le volet by-pass 20 qui est déplacé selon un angle au maximum égal à β par rapport à sa position dans l'état de repos, et la portion passive 33 de la roue doseur 12 n'entraine pas la butée mobile doseur 13, ce qui a pour effet de ne pas entrainer en rotation le volet doseur 21 qui reste dans sa position de repos.

En fin de plage B, le volet by-pass fait un angle égal à β par rapport à sa position dans l'état de repos. Dans cette position angulaire du volet by-pass, la roue doseur 12 a effectué une rotation d'un angle tel que la portion d'entrainement 35 est en contact avec la portion en saillie 13.1 de la butée mobile doseur 13.

Comme décrit en référence aux figures 4 et 5, le volet by-pass 20 revient à son état de repos, sous l'effet du ressort de torsion 27 à la suite d'une rotation en sens inverse du moteur électrique.

Dans l'exemple décrit, le volet by-pass s'étend sur un secteur angulaire globalement égal à 2 β et la zone de recouvrement 202 s'étend globalement sur un secteur angulaire β.

La figure 13 représente la vanne à la fin de la plage B, c'est-à-dire quand le volet by-pass a effectué une rotation d'un angle β par rapport à sa position dans l'état de repos (l'état de repos étant représenté sur la figure 11). En se déplaçant d'un angle β par rapport à sa position dans l'état de repos, le volet by-pass 20 a ouvert le troisième conduit 4 et obstrué le deuxième conduit 3, le secteur angulaire qui obstruait ce troisième conduit s'étant déplacé le long de la zone de recouvrement 202, le secteur angulaire qui était le long de la zone de recouvrement s'étant déplacé dans le deuxième conduit 3.

La plage C des courbes 40 et 41 correspond à un dosage de la voie by-pass 4 comme cela va être décrit en référence aux figures 10 et 14. Dans cette plage, le moteur poursuit sa rotation selon le deuxième sens de rotation. Dans ce sens de rotation des roues doseur et by-pass et partant de l'état des volets tels que représentés aux figures 9 et 13, l'effet de l'agencement des portions passives et d'entrainement des deux roues d'actionnement ainsi que les mouvements des butées mobiles by-pass et doseur sont tels que décrits précédemment relativement aux figures 4 et 5.

Ainsi, dans cette plage C, la portion d'entrainement 30 de la roue by-pass 11 entraine en rotation la portion en saillie 17.1 de la butée mobile by-pass 17 ce qui a pour effet d'entrainer en rotation le volet by-pass 20 qui est déplacé selon un angle au maximum égal à 2β par rapport à sa position dans l'état de repos, et la portion d'entrainement 35 de la roue doseur 12 entraine la portion en saillie 13.1 de la butée mobile doseur 13, ce qui a pour effet d'entrainer en rotation le volet doseur 21 qui ferme le conduit 2, c'est-à-dire lorsque celui-ci a un angle égal à +α par rapport à sa position dans l'état de repos .

Comme décrit en référence aux figures 4 et 5, le volet by-pass 20 revient dans son état de repos sous l'effet du ressort de torsion 27 à la suite d'une rotation en sens inverse du moteur électrique et le volet doseur 21 revient à son état de repos, sous l'effet du ressort de torsion 23 à la suite d'une rotation en sens inverse du moteur électrique.

La figure 14 représente la vanne à la fin de la plage C, c'est-à-dire quand le volet by-pass a effectué une rotation d'un angle β par rapport à sa position en fin de plage B. En se déplaçant d'un angle β par rapport à sa position en fin de plage B, le volet by-pass 20 n'a pas modifié la section d'ouverture des conduits 3 et 4. Le secteur angulaire du volet by-pass qui était le long de la zone de recouvrement s'est déplacé dans le deuxième conduit 3.

L'invention n'est pas limitée aux exemples qui viennent d'être décrits. Elle peut par exemple être utilisée en sortie de la voie refroidie d'une architecture EGR basse pression. Elle peut aussi être utilisée dans le cas d'une architecture EGR haute pression. Elle peut aussi être mise en oeuvre dans des vannes destinées à d'autres applications que pour des circuits d'admission d'air.

## Revendications

1. Vanne trois voies (1), notamment destinée à être utilisée dans un circuit d'admission d'air d'un véhicule automobile, comprenant :
- un corps (200) délimitant un premier (2), un deuxième (3) et un troisième (4) conduit, lesdits conduits débouchant dans un espace intérieur commun (201),
- un premier volet (21) apte à être déplacé pour obturer le premier conduit,
- un deuxième volet (20)
- un unique actionneur (8) agencé pour déplacer sélectivement l'un au moins du premier et du deuxième volet, la vanne étant **caractérisée en ce que** le deuxième volet (20) est apte à être déplacé pour obturer sélectivement l'un ou l'autre des deuxième (3) et troisième (4) conduits.

2. Vanne selon la revendication 1, dans laquelle l'actionneur est un moteur électrique à courant continu.

3. Vanne selon la revendication 1 ou 2, comprenant une première roue de transmission (12) agencée pour entraîner le premier volet et une deuxième roue de transmission (11) agencée pour entraîner le deuxième volet.

4. Vanne selon la revendication 3, l'actionneur (8) comprenant une roue d'actionnement (10) agencée pour entraîner directement l'une de la première et de la deuxième roue de transmission et indirectement l'autre de la première et de la deuxième roue de transmission.

5. Vanne selon la revendication 4, la roue d'actionnement étant agencée pour entraîner directement ou indirectement la deuxième roue de transmission et pour entraîner indirectement la première roue de transmission via au moins la deuxième roue de transmission.

6. Vanne selon la revendication 5, étant configurée de manière à ce qu'à partir d'un état de repos des premier et deuxième volets, une rotation selon un premier sens de rotation de la roue d'actionnement (10) provoque un déplacement du premier volet (21) sans déplacer le deuxième volet (20).

7. Vanne selon la revendication 6, étant configurée de manière à ce qu'à partir de l'état de repos des premier et des deuxième volets, une rotation selon un deuxième sens de rotation de la roue d'actionnement (10), opposé au premier sens de rotation, provoque, selon une première étape, un déplacement du deuxième volet (20) sans déplacer le premier volet (21).

8. Vanne selon la revendication 7, étant configurée de manière à ce que la poursuite de la rotation selon le deuxième sens de rotation de la roue d'actionnement (10) provoque, selon une deuxième étape ultérieure, un déplacement du premier volet (21) et du deuxième volet (20), sans que ce déplacement du deuxième volet ne modifie le débit dans les deuxième (3) et troisième (4) conduits.

9. Vanne selon la revendication 8, étant configurée de manière à ce que la deuxième étape ultérieure démarre lorsque le deuxième volet a atteint une position dans laquelle il obture l'un du deuxième et du troisième conduit.

10. Vanne selon l'une des revendication 8 et 9, le deuxième volet (20) ayant une section d'obturation supérieure à la section de passage dans le deuxième ou troisième conduit au niveau de l'espace intérieur commun (201).

11. Vanne selon l'une quelconque des revendications précédentes, dans laquelle au moins l'un du premier (21) et du deuxième (20) volet est solidaire d'un arbre (19 ,18), l'arbre étant pourvu d'une butée mobile (13 , 17) apte à être entrainée :
- par la première (12) ou deuxième (11) roue de transmission correspondante montée libre autour dudit arbre, et
- par un organe de rappel (23 ; 27).

12. Vanne selon la revendication 11, dans laquelle, l'une des première et deuxième roue de transmission est agencée pour n'entrainer ladite butée mobile que sur une portion de sa rotation.

13. Vanne selon l'une des revendications 11 et 12, dans laquelle l'organe de rappel est un ressort de torsion monté autour de l'arbre et contraint par ses deux extrémités, au moins d'une part par le corps et d'autre part par ladite butée mobile.

14. Vanne selon l'une quelconque des revendications précédentes, dans laquelle au moins un des deux arbres est équipé d'un capteur de position (16).

15. Vanne selon la revendication 14, dans laquelle l'arbre sur lequel est monté libre la première roue de transmission est équipé d'un capteur de position.

## Patentansprüche

1. Dreiwegeventil (1), welches insbesondere dazu bestimmt ist, in einer Lufteinlassanlage eines Kraftfahrzeugs verwendet zu werden, umfassend:
- einen Körper (200), der einen ersten (2), einen zweiten (3) und einen dritten (4) Kanal begrenzt, wobei die Kanäle in einen gemeinsamen Innenraum (201) münden,
- eine erste Klappe (21), die verlagerbar ist, um den ersten Kanal zu verschließen,
- eine zweite Klappe (20),
- einen einzigen Aktuator (8), der dafür eingerichtet ist, selektiv die erste und/oder die zweite Klappe zu verlagern,
wobei das Ventil **dadurch gekennzeichnet ist, dass** die zweite Klappe (20) verlagerbar ist, um selektiv entweder den zweiten (3) oder den dritten (4) Kanal zu verschließen.

2. Ventil nach Anspruch 1, wobei der Aktuator ein Gleichstrom-Elektromotor ist.

3. Ventil nach Anspruch 1 oder 2, welches ein erstes Getrieberad (12), das dafür eingerichtet ist, die erste Klappe anzutreiben, und ein zweites Getrieberad (11), das dafür eingerichtet ist, die zweite Klappe anzutreiben, umfasst.

4. Ventil nach Anspruch 3, wobei der Aktuator (8) ein Betätigungsrad (10) umfasst, das dafür eingerichtet ist, eines von dem ersten und dem zweiten Getrieberad direkt und das andere von dem ersten und dem zweiten Getrieberad indirekt anzutreiben.

5. Ventil nach Anspruch 4, wobei das Betätigungsrad dafür eingerichtet ist, das zweite Getrieberad direkt oder indirekt anzutreiben und das erste Getrieberad über wenigstens das zweite Getrieberad indirekt anzutreiben.

6. Ventil nach Anspruch 5, welches so gestaltet ist, dass, ausgehend von einem Ruhezustand der ersten und der zweiten Klappe, eine Drehung des Betätigungsrades (10) in einer ersten Drehrichtung eine Verlagerung der ersten Klappe (21) hervorruft, ohne die zweite Klappe (20) zu verlagern.

7. Ventil nach Anspruch 6, welches so gestaltet ist, dass, ausgehend von dem Ruhezustand der ersten und der zweiten Klappe, eine Drehung des Betätigungsrades (10) in einer zweiten Drehrichtung, die zur ersten Drehrichtung entgegengesetzt ist, in einem ersten Schritt eine Verlagerung der zweiten Klappe (20) hervorruft, ohne die erste Klappe (21) zu verlagern.

8. Ventil nach Anspruch 7, welches so gestaltet ist, dass die Fortsetzung der Drehung des Betätigungsrades (10) in der zweiten Drehrichtung in einem späteren zweiten Schritt eine Verlagerung der ersten Klappe (21) und der zweiten Klappe (20) hervorruft, ohne dass diese Verlagerung der zweiten Klappe die Durchflussmenge im zweiten (3) und dritten (4) Kanal ändert.

9. Ventil nach Anspruch 8, welches so gestaltet ist, dass der spätere zweite Schritt beginnt, wenn die zweite Klappe eine Position erreicht hat, in der sie entweder den zweiten oder den dritten Kanal verschließt.

10. Ventil nach einem der Ansprüche 8 und 9, wobei die zweite Klappe (20) einen Verschlussquerschnitt aufweist, der größer als der Durchgangsquerschnitt im zweiten oder dritten Kanal im Bereich des gemeinsamen Innenraumes (201) ist.

11. Ventil nach einem der vorhergehenden Ansprüche, wobei die erste (21) und/oder die zweite (20) Klappe fest mit einer Welle (19, 18) verbunden sind, wobei die Welle mit einem beweglichen Anschlag (13, 17) versehen ist, welcher antreibbar ist:
- durch das erste (12) oder zweite (11) entsprechende Getrieberad, das frei drehbar um die Welle gelagert ist, und
- durch ein Rückholorgan (23; 27).

12. Ventil nach Anspruch 11, wobei entweder das erste oder das zweite Getrieberad dafür eingerichtet ist, den beweglichen Anschlag nur auf einem Abschnitt seiner Drehung anzutreiben.

13. Ventil nach einem der Ansprüche 11 und 12, wobei das Rückholorgan eine Torsionsfeder ist, die um die Welle herum angebracht ist und über ihre beiden Enden wenigstens einerseits durch den Körper und andererseits durch den beweglichen Anschlag belastet ist.

14. Ventil nach einem der vorhergehenden Ansprüche, wobei wenigstens eine der beiden Wellen mit einem Positionssensor (16) ausgestattet ist.

15. Ventil nach Anspruch 14, wobei die Welle, auf der das erste Getrieberad frei drehbar gelagert ist, mit einem Positionssensor ausgestattet ist.

## Claims

1. Three-way valve (1), in particular intended to be used in an air intake circuit of a motor vehicle, comprising:
- a body (200) delimiting a first conduit (2), second conduit (3) and third conduit (4), the conduits opening in a common internal space (201),
- a first valve member (21) which is capable of being moved in order to close the first conduit,
- a second valve member (20),
- a single actuator (8) which is arranged in order to selectively move at least one of the first and second valve members, the valve being caractherized in that the second valve member (20) is capable of being moved in order to selectively close one or other of the second (3) and third (4) conduits.

2. Valve according to Claim 1, wherein the actuator is a direct-current electric motor.

3. Valve according to Claim 1 or Claim 2, comprising a first transmission wheel (12) which is arranged in order to carry the first valve member and a second transmission wheel (11) which is arranged in order to carry the second valve member.

4. Valve according to Claim 3, the actuator (8) comprising an actuation wheel (10) which is arranged in order to carry directly one of the first and second transmission wheels and indirectly the other of the first and second transmission wheels.

5. Valve according to Claim 4, the actuation wheel being arranged in order to directly or indirectly carry the second transmission wheel and to carry indirectly the first transmission wheel via at least the second transmission wheel.

6. Valve according to Claim 5, being configured in such a manner that, from a rest state of the first and second valve members, a rotation in a first rotation direction of the actuation wheel (10) brings about a movement of the first valve member (21) without moving the second valve member (20).

7. Valve according to Claim 6, being configured in such a manner that, from the rest state of the first and second valve members, a rotation in a second rotation direction of the actuation wheel (10), counter to the first rotation direction, brings about a movement of the second valve member (20) without moving the first valve member (21) in accordance with a first step.

8. Valve according to Claim 7, being configured in such a manner that the continuation of the rotation in the second rotation direction of the actuation wheel (10) brings about a movement of the first valve member (21) and the second valve member (20) in accordance with a second subsequent step without the movement of the second valve member modifying the flow in the second conduit (3) and third conduit (4).

9. Valve according to Claim 8, being configured in such a manner that the second subsequent step begins when the second valve member has reached a position in which it closes one of the second and third conduits.

10. Valve according to either of Claims 8 or 9, the second valve member (20) having a closure cross-section which is greater than the cross-section of flow in the second or third conduit in the region of the common internal space (201).

11. Valve according to one of the preceding claims, wherein at least one of the first valve member (21) and the second valve member (20) is/are fixedly joined to a shaft (19, 18), the shaft being provided with a movable stop (13, 17) which is capable of being carried:
- by the first corresponding transmission wheel (12) or second corresponding transmission wheel (11) which is mounted so as to be free about the shaft, and
- by a return member (23; 27).

12. Valve according to Claim 11, wherein one of the first and second transmission wheels is arranged in order to carry the movable stop only over a portion of the rotation thereof.

13. Valve according to either Claim 11 or 12, wherein the return member is a torsion spring which is mounted around the shaft and which is biased by the two ends thereof, at least at one side by the body and at the other side by the movable stop.

14. Valve according to one of the preceding claims, wherein at least one of the two shafts is provided with a position sensor (16).

15. Valve according to Claim 14, wherein the shaft on which the first transmission wheel is mounted so as to be free is provided with a position sensor.
